# EUROPEAN PATENT SPECIFICATION

(11) **EP 3 386 819 B1**
(45) Date of publication and mention of the grant of the patent: **01.01.2020**
(21) Application number: 16816442.4
(22) Date of filing: 15.11.2016
(51) Int. Cl.: B60T 17/08

(54) **DUST SEAL RETAINING DISC**
STAUBDICHTUNGSHALTESCHEIBE
DISQUE DE RETENUE POUR JOINT PARE-POUSSIÈRE

(30) Priority: 10.12.2015 TR 201515832
(43) Date of publication of application: 17.10.2018
(73) Proprietor: Arfesan Arkan Fren Elemanlari Sanayi Ve Ticaret Anonim Sirketi, Kocaeli (TR)
(72) Inventor: ARKAN, Fuat Burtan, Kocaeli (TR); BATTAL, Yavuz, Kocaeli (TR); KULAC, Omer Faruk, Kocaeli (TR)
(74) Representative: Kayahan, Senem
(86) International application number: PCT/TR2016/050443
(87) International publication number: WO 2017/099686

(56) References cited:
- WO-A1-2015/023238
- GB-A- 1 033 800
- US-A1- 2014 110 906
- US-A1- 2015 144 440

## Description

### Technical Field of the Invention

The invention subject to the application is related to a dust seal retaining disc which provides reliable impermeability by carrying out related connections and that has been developed in order to be used in brake chambers located in all pneumatic brake systems comprising dust seals.

### Known State of the Art (Prior Art)

The invention subject to the application is formed of a dust seal retaining disc which provides reliable impermeability by carrying out related connections and that has been developed in order to be used in brake chambers located in all pneumatic brake systems comprising dust seals.

Basically two different types of brake chambers are used such as the service brake chamber and the spring brake chamber in heavy duty commercial vehicles such as trucks, tow trucks, trailers and busses. A shaft has been provided as an end assembly in brake chambers and the protection of the shaft against environmental effects, affects the efficient operation and the usage life of the brake chamber. In applications where absolute impermeability is required, dust, dirt, water, mud and other corrosive materials enter into the chamber when the brake chamber is in use. For this reason a dust seal is used to provide impermeability on the upper bodies of the brake chambers. Various methods are used in order to couple the dust seal to the upper body, and it is known that a dust seal retaining disc is used in the prior art to couple the dust seal to the upper body.

Document GB 1 033 800 A discloses a device comprising a dust seal retaining disc and a seal for a brake chamber.

The dust seal retaining disc which has been developed in order to be used in brake chambers comprising a dust seal in the prior art, is press fitted to the upper body of the brake chamber by means of a pressing process. A dust seal having an elastic structure is placed over the dust seal retaining disc that has been mounted. A dust seal top and bottom impermeability edges are provided at both ends of the top and bottom section of the dust seal, and said edges are fitted into the grooves that have been provided on the retaining disc, which act as impermeability means in order to ensure that the dust seal remains fixed on the dust seal retaining disc. Impermeability of the dust seal and the dust seal retaining disc connection is provided by means of said impermeability edges. The impermeability between the upper body that has been fitted by press fitting and the dust seal retaining disc is provided by means of a chemical agent that has been applied following the pressing process.

However as the impermeability region between the dust seal and the dust seal retaining disc in the brake chamber used in a dust seal retaining disc that has been described above, is provided by the lower impermeability edge which contacts a single surface of the dust seal retaining disc, the impermeability is insufficient and it leads to impermeability problems in said region. Additionally the impermeability between the dust seal retaining disc and the upper body is provided by means of a chemical agent, and as a result chemical usage is increased and impermeability problems may be faced due to a probable erroneous usage of the chemical agent. Moreover as the dust seal retaining disc of the prior art comprises two different connection and impermeability regions, it cannot be shortened and therefore a brake chamber having a short shaft cannot be used.

Due to the listed disadvantages of the dust seal retaining disc described above, the efforts to develop new dust seal retaining discs in the art is still continued. According to the invention subject to the application; a better impermeability regions is established from the two surfaces by improving the insufficient impermeability region between the dust seal and the dust seal retaining disc. The impermeability of this invention is obtained without using a pressing procedure or any kind of chemical agent application, and as a result the production cost is reduced. The length of the dust seal retaining disc described in this invention can be shortened and as a result it can be used on a brake chamber having a short shaft. Additionally as the dust seal retaining disc comprises a return spring centering form at the side facing into the body accurate centering of the return spring is provided.

### Brief Description of the Invention

The invention subject to the application is related to a dust seal retaining disc which provides reliable impermeability by carrying out related connections and that has been developed in order to be used in brake chambers located in all pneumatic brake systems comprising dust seals.

The dust seal retaining disc subject to the invention can be used in all brake chambers in which dust seals are used. Said brake chamber, basically comprises an upper body, a shaft, a dust seal functioning as an impermeability element which is provided in order to protect said shaft from environmental effects, and a return spring which enables the shaft to be retracted. As a difference to the applications of the known state of the art, impermeability in this invention is provided by means of one impermeability and connection area which provides assembly of dust seal, dust seal retaining disc and upper body. The length of the dust seal retaining disc described in this invention can be shortened and by this means chambers having short shafts can be used.

By means of the dust seal retaining disc that has been formed by bringing the mechanical sub parts the following is established;
- A single connection and impermeability region is formed such that the dust seal is between the dust seal retaining disc and the upper body.
- Safer impermeability is provided at a single region by eliminating the need for the pressing process or the usage of a chemical agent.
- A shorter chamber and a brake chamber having a shorter shaft can be obtained.
- The return spring is better centered by means of the return spring centering form which has been provided at the side facing the inner section of the upper body.
- The reduction or the height of the dust seal retaining disc has led to the development of a lighter and less costly dust seal retaining disc.

### Definition of the Figures Describing the I nvention

The figures that have been prepared in order to further describe the dust seal retaining disc which provides reliable impermeability by carrying out related connections and that has been developed in order to be used in brake chambers located in all pneumatic brake systems comprising dust seals have been described below.
Fig 1- side section view of the brake chamber
Fig 2- detailed side section view of the dust seal

### Definitions of the aspects/ sections/ parts forming the invention

The parts/sections/aspects shown in the figures that have been prepared in order to further describe the dust seal retaining disc developed by means of this invention have been numbered and the references of each number has been given below.
**1.** Brake chamber
**2.** Dust seal
**3.** Dust seal retaining disc
**4.** Upper body
**5.** Return spring
**6.** Shaft
**7.** Return spring centering form
**8.** Dust seal top impermeability edge
**9.** Dust seal bottom impermeability edge

### Detailed Description of the Invention

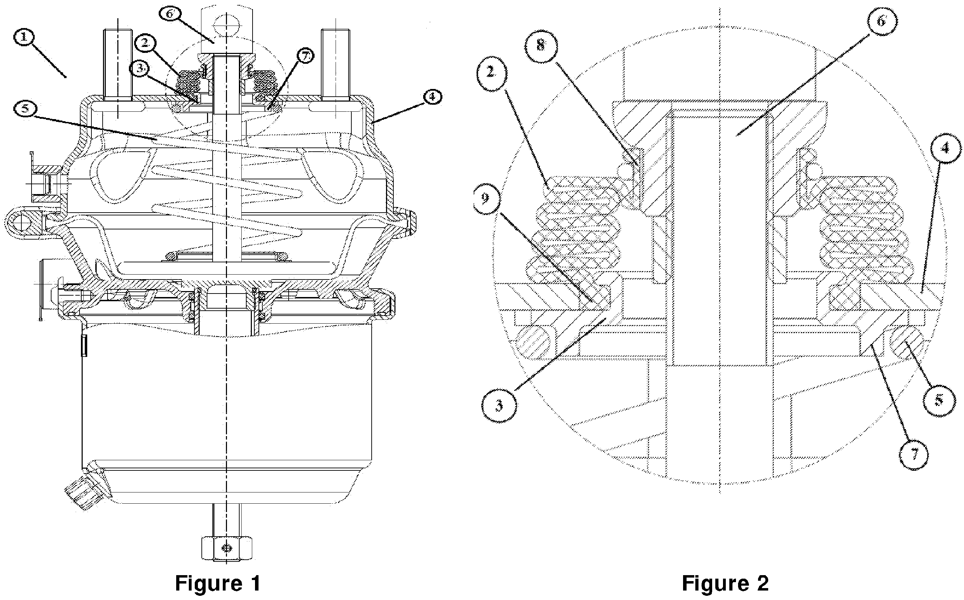

In this invention the dust seal retaining disc (3) which provides reliable impermeability by carrying out related connections and that has been developed in order to be used in brake chambers located in all pneumatic brake systems comprising dust seals (2) is described. Figure 1 shows the side section view of the brake chamber (1) in which a dust seal retaining disc (3) of the invention is used. Said brake chamber (1), basically comprises an upper body (4), a shaft (6), a dust seal (2) functioning as an impermeability element which is provided in order to protect said shaft (6) from environmental effects, and a Return spring (5) which enables the shaft (6) to be retracted. Figure 2, shows the detailed side section view of the dust seal (2) which provides impermeability by being placed on the dust seal retaining disc (3) of the invention.

A dust seal retaining disc (3) which has been developed to be used in all pneumatic brake systems, which provides reliable impermeability for a brake chamber (1) comprising dust seals (2), comprising an upper body (4), a shaft (6), the dust seal (2) which has been provided to protect said shaft (6) from environmental effects and which functions as an impermeability element, and a return spring (5) which enables to retract the shaft (6); wherein the device further comprises;
- a protrusion which prevents the retraction of the dust seal bottom impermeability edge (9), which eliminates the possibility for a leakage to occur at the side facing the upper body (4), wherein said protrusion is placed between the upper body (3) and the return spring (5),
- a single connection area, where impermeability is provided by inserting the dust seal bottom impermeability edge (9) between the upper body (3) and the dust seal retaining disc (3), thanks to the elastic structure of the dust seal impermeability edge,
- and a return spring centering form (7) of the dust seal retaining disc (3) which is located between upper body (4) and the return spring (5), that limits the motion of the return spring (5) on the horizontal axis by providing a protrusion at the side facing inside of the upper body (4).

The process steps regarding the mounting of the dust seal retaining disc (3) subject to the invention comprises;
- The disc (3) is positioned between the upper body (4) and the Return spring (5),
- the Return spring (5) is placed on the Return spring centering form (7) in order to limit the motion of the return spring (5) at the horizontal axis,
- The upper impermeability edge (8) of the dust seal provides impermeability between the shaft and the atmosphere, preferably by tightening the shaft (6) by means of a suitable assembly such as a clamp or a ring and the dust seal bottom impermeability edge (9) is compressed into the connection area that has been formed between the dust seal retaining disc (3) and the upper body (4) thanks to its elastic structure.
- The retraction of the dust seal bottom impermeability edge (9) is prevented by means of the groove that has been provided at the side facing the upper body (4) of the dust seal retaining disc (3).
- . In this way, assembly of the upper body (4), dust seal (2) and dust seal retaining disc (3) is completed without any kind of leakage and ensuring reliable impermeability;

## Claims

1. A device comprising a dust seal retaining disc (3) an upper body (4) and dust seal (2) which has been developed to be used in all pneumatic brake systems, which provides reliable impermeability, the device further comprising an upper body (4), a shaft (6) and a return spring (5) which enables to retract the saft (6) wherin said dust seal (2) has been provided to protect said shaft (6) from environmental effects and which functions as an impermeability element, the device furthercomprising
• a protrusion which prevents the return of the dust seal bottom impermeability edge (9), which eliminates the possibility for a leakage to occur at the side facing the upper body (4), wherein said protrusion is placed between the upper body (4 ) and the return spring (5),
• a single connection area, between the upper body (3) and the dust seal retaining disc (3), thanks to the elastic structure of the dust seal impermeability edge,
• and a return spring centering form (7) of the dust seal retaining disc (3) which is located between upper body (4) and the return spring (5), wherein
• the retaining disc (3) is positioned between the upper body and the return spring (5),
• the return spring (5) is placed on the return spring centering form (7) in order to limit the motion of the return spring (5) at the horizontal axis,
wherein
• the upper impermeability edge (8) of the dust seal provides impermeability between the shaft and the atmosphere, preferably by tightening the shaft (6) by means of a suitable assembly and the dust seal bottom impermeability edge (9) is compressed into the connection area that has been formed between the dust seal retaining disc (3) and the upper body (4) thanks to its elastic structure, wherein
• the retraction of the dust seal bottom impermeability edge (9) is prevented without any leakage and with reliable impermeability by means of the groove that has been provided at the side facing the upper body (4) of the dust seal retaining disc (3).

## Patentansprüche

1. Vorrichtung mit einer Staubdichtungshaltescheibe (3), einem Oberkörper (4) und einer Staubdichtung (2), die für den Einsatz in allen pneumatischen Bremssystemen entwickelt wurde und eine zuverlässige Dichtigkeit gewährleistet, wobei die Vorrichtung ferner einen Oberkörper (4), einen Schaft (6) und eine Rückstellfeder (5) umfasst, die es ermöglicht, den Schaft (6) einzuziehen, wobei die Staubdichtung (2) vorgesehen ist, um den Schaft (6) vor Umwelteinflüssen zu schützen, und die als ein undurchlässiges Element funktioniert, die Vorrichtung ferner umfasst
• einen Vorsprung, der das Rückführen der untere undurchlässige Kante (9) der Staubdichtung verhindert, der die Möglichkeit ausschließt, dass eine Leckage an der dem Oberkörper (4) zugewandten Seite auftritt, wobei der Vorsprung zwischen dem Oberkörper (4) und der Rückstellfeder (5) angeordnet ist,
• einen einzigen Verbindungsbereich zwischen dem Oberkörper (3) und der Staubdichtungsrückhaltescheibe (3), durch die elastische Struktur der undurchlässigen Kante der Staubdichtung, und
• eine Rückstellfeder-Zentrierform (7) der Staubdichtungshaltescheibe (3), die sich zwischen Oberkörper (4) und Rückstellfeder (5) befindet, wobei
• die Haltescheibe (3) zwischen dem Oberkörper und der Rückstellfeder (5) positioniert ist,
• die Rückstellfeder (5) auf der Rückstellfeder-Zentrierform (7) angeordnet ist, um die Bewegung der Rückstellfeder (5) in der horizontalen Achse zu begrenzen, wobei die obere undurchlässige Kante (8) der Staubdichtung die Undurchlässigkeit zwischen dem Schaft und der Atmosphäre gewährleistet, vorzugsweise durch Anziehen des Schaftes (6) mittels einer geeigneten Anordnung und die untere undurchlässige Kante (9) der Staubdichtung in den Verbindungsbereich komprimiert wird, der aufgrund seiner elastischen Struktur zwischen der Staubdichtungsrückhaltescheibe (3) und dem Oberkörper (4) gebildet worden ist, wobei
• das Einziehen der unteren undurchlässigen Kante (9) der Staubdichtung wird leckagefrei und mit zuverlässiger Undurchlässigkeit durch die Nut verhindert, die auf der dem Oberkörper (4) zugewandten Seite der Staubdichtungsscheibe (3) vorgesehen ist.

## Revendications

1. Dispositif comprenant un disque de retenue de joint étanche aux poussières (3), un corps supérieur (4) et un joint étanche aux poussières (2) qui a été développé pour être utilisé dans tous les systèmes de freinage pneumatique, qui fournit une imperméabilité fiable, le dispositif comprenant en outre un corps supérieur (4), un arbre (6) et un ressort de rappel (5) qui permet de rétracter l'arbre (6) dans lequel ledit joint étanche aux poussières (2) a été prévu pour protéger ledit arbre (6) des effets de l'environnement et qui fonctionne comme un élément imperméabilité, le dispositif comprenant en outre
• une protubérance qui empêche le retour du bord d'imperméabilité du fond du joint étanche aux poussières (9), qui élimine la possibilité qu'une fuite se produise sur le côté tourné vers le corps supérieur (4), dans laquelle ladite protubérance est placée entre le corps supérieur (4) et le ressort de rappel (5),
• une seule zone de connexion, entre le corps supérieur (3) et le disque de retenue du joint étanche aux poussières (3), grâce à la structure élastique du bord d'imperméabilité du joint étanche aux poussières, et
• une forme de centrage de ressort de rappel (7) du disque de retenue de joint étanche aux poussières (3) qui est situé entre le corps supérieur (4) et le ressort de rappel (5), dans laquelle
• le disque de retenue (3) est positionné entre le corps supérieur et le ressort de rappel (5),
• le ressort de rappel (5) est placé sur la forme de centrage du ressort de rappel (7) afin de limiter le mouvement du ressort de rappel (5) sur l'axe horizontal, dans lequel le bord supérieur d'imperméabilité (8) du joint étanche aux poussières assure l'imperméabilité entre l'arbre et l'atmosphère, de préférence en serrant l'arbre (6) au moyen d'un assemblage approprié, et le bord imperméabilité inférieur (9) du joint étanche aux poussières est comprimé dans la zone de connexion qui a été formée entre le disque de retenue (3) du joint étanche aux poussières et le corps supérieur (4) grâce à sa structure élastique, où
• la rétraction du bord imperméabilité inférieur (9) du joint étanche aux poussières est empêchée sans aucune fuite et avec une étanchéité fiable grâce à la rainure prévue sur le côté tourné vers le corps supérieur (4) du disque de retenue (3) du joint étanche aux poussières.
